# FASCICULE DE BREVET EUROPEEN

(11) **EP 2 396 286 B1**
(45) Date de publication et mention de la délivrance du brevet: **24.10.2018**
(21) Numéro de dépôt: 10708322.2
(22) Date de dépôt: 10.02.2010
(51) Int. Cl.: C04B 26/26, C04B 40/00, C08L 95/00

(54) **SYSTEME D'ADDITIFS POUR LA PREPARATION D'ENROBE TIEDE A USAGE ROUTIER A BASE DE SURFACTANT DE TYPE AMINE**
SYSTEM UND ADDITIVE ZUR HERSTELLUNG EINER WARMEN MISCHUNG FÜR DEN STRASSENBAU AUF BASIS EINES TENSIDS VOM AMIN-TYP
SYSTEM OF ADDITIVES FOR THE PREPARATION OF A WARM MIX FOR ROAD USE BASED ON AN AMINE-TYPE SURFACTANT

(30) Priorité: 13.02.2009 FR 0950938
(43) Date de publication de la demande: 21.12.2011
(73) Titulaire: COLAS S.A., 92653 Boulogne-Billancourt Cédex (FR)
(72) Inventeur: DURAND, Graziella, Chevreuse 78460 (FR); THORNTON, John, Galway Irlande (IE)
(74) Mandataire: Jacobacci Coralis Harle
(86) Numéro de dépôt international: PCT/FR2010/050225
(87) Numéro de publication internationale: WO 2010/092300

(56) Documents cités:
- WO-A-00/71619
- WO-A-01/64779
- WO-A-2009/013328
- FR-A- 2 901 801
- US-A- 4 743 304
- US-B1- 6 194 471
- MITSUBISHI KASEI CORP: "Room temperature-hardenable asphalt aggregate mixture for pavemtns and its preparation" CHEMICAL ABSTRACTS, vol. 114, no. 20, 20 mai 1991 (1991-05-20) , page 363, XP000189912 ISSN: 0009-2258

## Description

La présente invention concerne un système d'additif à base de surfactant de type amidoamine ou amine utilisé pour fabriquer des mélanges bitumineux appliqués à chaud présentant une température de fabrication abaissée tels que des enrobés tièdes. L'invention concerne également le liant hydrocarboné et les enrobés comprenant ledit système d'additifs ainsi que leur procédé de fabrication.

Selon l'invention, on entend par « mélanges bitumineux » des granulats mélangés à un liant hydrocarboné tel que du bitume ou des liants de synthèse confectionnés à partir de matières premières d'origine pétrolière ou issue de la biomasse, utilisés pour réaliser des couches et/ou revêtements de construction routière et/ou de génie civil. Le bitume est le principal liant hydrocarboné utilisé dans le domaine de la construction routière ou du génie civil. Il peut être utilisé pur ou modifié par ajout de polymères, il est alors appelé bitume modifié.

Les liants hydrocarbonés utilisés comme liants routiers sont trop visqueux à température ambiante pour présenter une maniabilité ou encore une mouillabilité correcte vis-à-vis de granulats. Il existe différents moyens de rendre le bitume ou le bitume modifié maniable : soit par chauffage en fonction de sa viscosité, soit en le plaçant en émulsion ou encore en abaissant sa viscosité par mélange avec des solvants ou « fluxants ».

Dans le cadre de la construction et de l'entretien des routes, on utilise donc actuellement des enrobés bitumineux regroupés en deux catégories principales : les enrobés à froid et les enrobés à chaud. Les enrobés à froid, fabriqués et mis en oeuvre à froid à une température généralement comprise entre 20 et 80°C, sont préférentiellement utilisés pour l'entretien préventif et curatif des routes. Les enrobés à chaud, fabriqués à une température généralement comprise entre 100 et 250°C et mis en oeuvre à une température généralement comprise entre 100 et 150°C, sont quant à eux couramment utilisés pour la fabrication des couches de roulement.

La qualification « tiède » correspond au sens où la profession routière emploie cet adjectif (voir par exemple la revue technique Travaux n°848 de janvier 2008 - Des enrobés environnementaux économes en énergie). On entend par « enrobé tiède », un enrobé comprenant un liant hydrocarboné et un système d'additif, qui de par la présence de ce système d'additif particulier, peut être fabriqué et mis en oeuvre à des températures inférieures de 30 à 50°C par rapport aux températures traditionnelles nécessaires à la fabrication et la mise en oeuvre d'un enrobé comprenant le même liant hydrocarboné sans additif.

La fabrication d'un mélange bitumineux du type précité comprend le mélange du liant et des charges ou granulats à une température dite « de fabrication ». Puis, cette fabrication est suivie de l'épandage de ce mélange à une température de mise en oeuvre, du compactage du mélange répandu si nécessaire, et enfin du refroidissement du mélange compacté.

La température de fabrication des mélanges varie selon la nature du liant hydrocarboné et plus particulièrement en fonction de la classe du bitume utilisé. Les bitumes peuvent être classés suivant leur classe de pénétrabilité. Chaque classe ou grade correspond à un intervalle de mesures de pénétrabilité. Les bitumes « durs » ont des valeurs de pénétrabilité faibles, les bitumes « mous » ont des valeurs de pénétrabilité relativement élevées.

Pour les enrobés bitumineux à chaud traditionnels, les températures de mélange entre granulats et liant hydrocarboné comprenant un bitume pur classiquement de pénétrabilité 35/50, sont généralement de 140 à 165°C, voire de 150 à 175°C quand les conditions météorologiques sont plus dures. Dans le cas d'utilisation de liant de pénétrabilité inférieure, les températures de mélange tendent vers les valeurs hautes de ces fourchettes.

Plusieurs problèmes sont liés aux hautes températures nécessaires à la fabrication et à la mise en oeuvre des enrobés à chaud. Ils entraînent notamment une forte consommation d'énergie et l'émission de grandes quantités de gaz à effet de serre. L'utilisation des enrobés à chaud pourrait également représenter un risque au niveau de la santé pour le personnel, ainsi qu'une gêne pour les riverains, sans précautions particulières.

Des études ont été réalisées afin de développer des liants modifiés permettant de fabriquer des enrobés à une température de fabrication abaissée notamment grâce à l'ajout d'additifs divers tels que des fluxants, des produits organiques de nature parafinique ou des cires d'hydrocarbure.

La demande de brevet FR 2 901 801 divulgue, par exemple, des produits bitumineux et mélanges de ces produits bitumineux avec des granulats utilisables notamment dans le domaine de la construction et de l'entretien de tapis routiers. Il est précisé que l'additivation du produit bitumineux ou de son mélange avec des granulats à l'aide d'additifs chimiques permet de baisser la température de production des mélanges de granulats et de produit bitumineux de 20 à 40°C, sans dégrader les propriétés du produit bitumineux et du mélange entre produit bitumineux et granulats. Les additifs comprennent nécessairement au moins un additif désigné par A ou A1. L'additif A comprend un copolymère oxyde d'éthylène - oxyde de propylène et l'additif A1 répond à la formule chimique suivante : R-O-CH2CH(CH3)O)a-(CH2CH2O)b)cP(=O)-OHd.

Le document US 6,194,471 décrit une composition apte à augmenter l'adhésion entre le bitume et le granulat comprenant : a) de 25 à 95% en poids d'un mélange de dérivés aminés d'acide gras choisis dans le groupe constitué des amidoamines, imidazolines, polyamidoamines, amidoamines/imidoamines, polyimidazolines et leur mélange, b) de 4% à 35% en poids d'un acide minéral, c) de 1 à 70% en poids d'un solvant polaire organique, d) et éventuellement, jusqu'à 70% en poids d'un dérivé aminé d'acide gras ayant une structure chimique différente de celle du composant a) choisi parmi les polyamines du propylène grasses, les polyamines du propylène grasses éthoxylées, les amidoamines grasses, les imidazolines grasses et les polyamidoamines grasses, les amidoamines/imidoamines grasses et les polyimidazolines grasses.

Le document WO 2009/013328 décrit une formulation de bitume ou d'asphalte comprenant un mélange de bitume et d'agrégats, et un système d'additifs uniformément distribué dans ledit mélange. En particulier, le système d'additifs comprend : de 10 à 60% en poids d'au moins un tensioactif de type amine ou amine modifiée et de 20 à 90% d'un composant modifiant la rhéologie de l'asphalte, tel qu'une cire ou une résine.

Toutefois, les différentes techniques utilisées jusqu'à présent pour augmenter la maniabilité des liants ou abaisser la température de fabrication des enrobés ne permettent pas de suffisamment baisser la température de fabrication des enrobés à chaud et/ou ne permettent pas de maintenir les propriétés mécaniques des produits obtenus.

Il existe donc aujourd'hui un besoin d'une solution permettant d'abaisser la température de fabrication et de mise en oeuvre des enrobés tiède, présentant des propriétés d'utilisation et des propriétés mécaniques pour les produits obtenus, au moins similaires, si ce n'est améliorées, par rapport aux enrobés à chaud fabriquée et mis en oeuvre de manière conventionnelle.

De plus, cette baisse de température ne doit pas entraîner de modification majeure des procédés traditionnels utilisés pour les enrobés à chaud, qu'il s'agisse des procédés de fabrication ou des procédés de mise en oeuvre.

De manière surprenante, l'invention permet de réduire la température de fabrication et de mise en oeuvre des enrobés à chaud grâce à l'addition au bitume de base retenu pour la formulation de l'enrobé bitumineux d'un système d'additifs particulier. Cette diminution peut aller jusqu'à 50°C.

La présente invention concerne donc un système d'additifs tel que défini en revendication 1 pour la préparation d'enrobé tiède à usage routier, à savoir mis en oeuvre à des températures inférieures de 30 à 50°C par rapport aux températures traditionnellement nécessaires pour la mise en oeuvre d'enrobés à chaud, comprenant :
- un ou plusieurs composants (A) choisis parmi les dopes d'adhésivité choisis parmi les alkylamidopolyamines, les alkylimidazolines et les alkylimidazopolyamines, qui sont des produits de réaction entre une polyamine (C) et un acide carboxylique gras ; les alkylpolyamines à chaîne grasse ; les produits de réaction entre une polyamine (C) et les produits de réaction d'un acide carboxylique gras ou d'une huile végétale avec la diéthanolamine ; ladite polyamine (C) est de préférence une polyalkylène-polyamines pouvant être, par exemple, la diméthylaminopropylamine, la N-aminoéthylpipérazine, la diéthylènetriamine, la triéthylènetétraamine ou la tétraéthylènepentaamine, et
- un ou plusieurs composants (B) choisis parmi les (poly)amines grasses éthoxylées, les amido(poly)amines grasses éthoxylées répondant à la formule 1 ou 2 suivante : 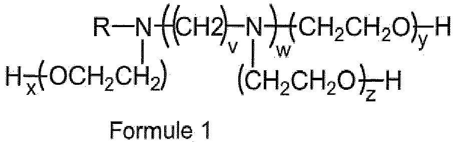 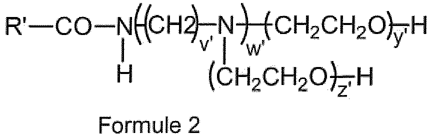 dans lesquelles :
   - R et R' représentent un radical hydrocarboné en C8 à C24, de préférence un alkyle, un alcényle en C8 à C22 ou un mélange de ceux-ci ;
   - v et v' sont des entiers supérieurs ou égaux à 1, de préférence compris de 1 à 6, et de manière encore plus préférée v et v' valent 3 ; et
   - w est un entier supérieur ou égal à 0, de préférence compris entre 0 et 5, et mieux encore compris entre 0 et 3,
   - w' est un entier supérieur ou égal à 1, de préférence compris entre 1 et 5, et mieux encore compris entre 1 et 3,
   - x, y, z, sont des entiers choisis tels que la somme (x+y+z) soit supérieure à 3, de préférence comprise entre 3 et 20, et mieux encore de 15,
   - y' et z' sont des entiers choisis tels que la somme (y'+z') soit comprise entre 1 et 1000, de préférence supérieure 3, de préférence comprise entre 3 et 20, et mieux encore de 15.

On entend par « système d'additifs » selon l'invention, l'ensemble des additifs destinés à être ajoutés au liant hydrocarboné. Le système d'additifs de l'invention peut être constitué des seuls composés (A) et (B) ou d'un mélange de plusieurs autres additifs.

Selon l'invention, le terme « (poly)amine » regroupe les amines comprenant un groupement amine et les polyamines comprenant au moins deux groupements amine.

Selon l'invention, le terme « amido(poly)amine » regroupe les amidoamines comprenant un groupement amine et les amidopolyamines comprenant au moins deux groupements amine.

L'invention concerne également un liant hydrocarboné pour la réalisation de couches et/ou revêtements de construction routière et/ou de génie civil, comprenant le système d'additifs décrit ci-dessus.

L'invention concerne également un mélange bitumineux tel qu'un enrobé tiède à usage routier comprenant un granulat et le liant hydrocarboné décrit ci-dessus. Enfin, l'invention concerne le procédé de préparation dudit mélange bitumineux ou enrobé bitumineux.

Dans un mode de réalisation avantageux, le système d'additif de l'invention possède en outre les caractéristiques suivantes seules ou en combinaison :
- lesdites (poly)amines grasses éthoxylées sont choisies parmi les monoamines, les diamines, les triamines ou les tétraamine grasses éthoxylées, de préférence parmi les diamines grasses éthoxylées répondant à la formule B1 suivante : 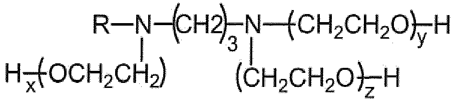 dans laquelle R représente une chaîne hydrocarbonée linéaire ou ramifiée, saturée ou insaturée, et x, y, z, sont des entiers choisis tels que la somme (x+y+z) soit supérieure à 3, de préférence comprise entre 3 et 20, et mieux encore de 15,
- lesdites amido(poly)amines grasses éthoxylées sont choisies parmi les amidomonoamines, les amidodiamines ou amidotriamines grasses éthoxylées, de préférence parmi les amidomonoamines grasses éthoxylées répondant à la formule B2 suivante : 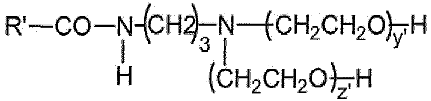 dans laquelle R' représente une chaîne hydrocarbonée linéaire ou ramifiée, saturée ou insaturée, et y' et z' sont des entiers choisis tels que la somme (y'+z') soit supérieure 3, de préférence comprise entre 3 et 20, et mieux encore de 15,
- les groupements R ou R' représente un radical hydrocarboné en C8 à C18, comprenant de préférence des chaînes alkyles insaturées en C18,
- le ou les composants B dérivent d'un acide gras d'origine animale, en particulier du suif,
- les groupements R ou R' sont des dérivés de graisses et d'huiles naturelles tels que le suif, l'huile de colza, de soja, le tallol, de préférence R ou R' représente un alkyle de suif,
- ladite polyamine (C) est de préférence une polyalkylène-polyamines pouvant être, par exemple, la diméthylaminopropylamine, la N-aminoéthylpipérazine, la diéthylènetriamine, la triéthylènetétraamine ou la tétraéthylènepentaamine,
- la polyamine (C) n'est pas éthoxylée,
- les dopes d'adhésivités sont choisis parmi les produits de réaction d'un acide gras de préférence de tall oil ou de colza avec une polyamine (C), de préférence du type polyéthylène polyamine et mieux encore la tétraéthylène pentaamine,
- les systèmes d'additifs comprend, par rapport au poids total du système d'additifs, de 10 à 70%, de préférence de 10 et 50% en poids du ou des composants A et de 30 à 90%, de préférence de 50 à 90% en poids du ou des composants B.

Dans un mode de réalisation avantageux, le liant hydrocarboné de l'invention possède en outre les caractéristiques suivantes seules ou en combinaison :
- le liant hydrocarboné est de préférence un bitume pur,
- le système d'additifs représente entre 0,1 et 2% en poids, de préférence entre 0,3 et 0,6% en poids, par rapport au poids total du liant hydrocarboné.

Selon l'invention, le terme « exclusivement constitué de », signifie constitué d'au moins 95%, de préférence d'au moins 99% et mieux encore de 100% en poids.

Les dopes d'adhésivité sont des produits chimiques dont la présence en très faible quantité améliore l'adhésivité d'un liant hydrocarboné à des granulats, notamment quand ils sont humides. Les dopes sont donc des produits tensio-actifs modifiant le mouillage des granulats par le liant et améliorant les liaisons entre ceux-ci.

Les agents d'adhésivité préférés sont choisis parmi les alkylamidopolyamines, les alkylimidazolines et les alkylimidazopolyamines, qui sont des produits de réaction entre une polyamine et un acide carboxylique gras ; les alkylpolyamines à chaîne grasse ; les produits de réaction entre une polyamine et les produits de réaction d'un acide carboxylique gras ou d'une huile végétale avec la diéthanolamine ; ladite polyamine pouvant être, par exemple, la diméthylaminopropylamine, la N-aminoéthylpipérazine, la diéthylènetriamine, la triéthylènetétraamine ou la tétraéthylènepentaamine.

Les amidoamines grasses sont habituellement linéaires mais elles peuvent également exister sous forme d'imidazoline (éthylène amines) ou de tétrahydropyrimidines (propylène amines).

Les dopes d'adhésivité peuvent être choisis parmi les alkylamidopolyamines à l'exclusion des amido(poly)amine à chaîne grasse éthoxylées. Les dopes d'adhésivité peuvent également être choisis parmi les alkylpolyamines à chaîne grasse à l'exclusion des polyamines à chaîne grasse éthoxylées.

Les composés B de l'invention appartiennent à la catégorie des surfactants amines. Toutefois, ces produits ne possèdent pas de bonnes propriétés pour être utilisés en tant que dope d'adhésivité. Selon l'invention, ces produits ne sont pas donc pas considérés comme des dopes d'adhésivité.

L'invention concerne également un procédé de préparation d'un mélange bitumineux tel qu'un enrobé tiède comprenant des granulats minéraux enrobés d'un liant hydrocarboné, le procédé comprenant une étape de séchage des granulats suivie d'une étape d'enrobage des granulats par un liant hydrocarboné dans un malaxeur. Selon le procédé de l'invention, le liant hydrocarboné comprend du bitume ou un liant de synthèse et le système d'additifs de l'invention. Ledit système d'additifs peut être ajouté au bitume ou au liant de synthèse par tout procédé connu d'introduction d'additifs. De préférence, le système d'additif est mélangé avec le liant hydrocarboné avant introduction dans le malaxeur.

La température de fabrication d'un enrobé bitumineux comprenant un bitume de grade 35/50 dans le procédé de l'invention est comprise entre 110 et 140°C, de préférence entre 110 et 130°C. La température de fabrication d'un enrobé bitumineux comprenant un bitume de pénétrabilité inférieure à 35 (1/10 de mm) dans le procédé de l'invention est comprise entre 130 et 150°C, de préférence entre 135 et 145°C. Cela représente un abaissement de 30 à 50°C par rapport aux températures usuelles.

L'invention concerne encore l'utilisation du système d'additifs pour abaisser la température de fabrication et d'application de mélanges bitumineux comprenant des granulats et du bitume.

Le bitume selon la présente invention est un mélange de matières hydrocarbonées d'origine naturelle issues de la fraction lourde obtenue lors de la distillation du pétrole, ou provenant de gisements naturels se présentant sous forme solide ou liquide, de densité comprise entre 0,8 et 1,2. Les bitumes de l'invention peuvent être préparés par toute technique conventionnelle. Sont également admis comme bitumes au sens de l'invention les liants d'origine végétale tel que le Végécol®, commercialisé par la société Colas et décrit dans la demande de brevet FR 2 853 647, les liants de synthèse d'origine pétrolière tels que la gamme des liants Bituclair® commercialisée par la société Colas, les bitumes modifiés par incorporation d'additifs de toute nature ou bien encore les bitumes améliorés par l'addition de polymères de différents types, tels que des copolymères d'éthylène et d'acétate de vinyle, ou des copolymères statistiques ou à blocs de styrène et de diènes conjugués, par exemple les copolymères à blocs SBS. Cette liste n'étant bien entendu pas limitative. Il est également possible d'utiliser des mélanges de bitumes de différents types. De préférence, le bitume de la présente invention est un bitume de grade 10/20 à 35/50.

Pour le terme granulat, il est fait référence aux matériaux décrits dans la norme XP P 18-545. Les agrégats, au sens de XP P 98-135, sont également susceptibles d'être utilisés en combinaison avec le liant selon l'invention. Pour caractériser les enrobés, on utilise en particulier la description de leur formule granulaire, c'est-à-dire la répartition de la masse des granulats qui entrent dans la composition de l'enrobé en fonction de la classe granulaire. Les granulats sont de nature minérale.

L'ensemble des caractéristiques et avantages de la présente invention ressortiront mieux des exemples qui suivent, donnés à titre illustratif et non limitatif.

### Exemple

### I. Préparation et caractérisation du système d'additifs

On réalise le système d'additifs n°1, correspondant à un mélange 50:50 en poids des deux composants suivants :
(A) Produits de réaction entre la tétraéthylènepentaamine et des acides carboxyliques gras tels que les acides gras issus du tall oil ou du colza, le rapport molaire de tétraéthylènepentaamine par rapport aux acides carboxyliques gras est de 1 :1 ; et
(B) Mélange de diamines grasses éthoxylées qui dérivent du suif comprenant majoritairement la suif propylène diamine, produit commercialisé par sous le nom Imbentin DT/150 commercialisé par la société KolB dont la somme (x + y +z) de groupe éthoxylé est 15.
Le système d'additifs n°1 possède les caractéristiques suivantes :
- liquide jusqu'à -5°C,
- viscosité à 20°C : 350 mPa.s,
- point éclair : supérieur à 200°C,
- miscible au bitume à raison de 0,1 à 2% en poids par rapport au poids total du bitume.

### II. Préparation du liant hydrocarboné

### 11.1. Liant hydrocarboné à base d'un bitume 10/20

Le tableau I ci-dessous, présente une comparaison entre les caractéristiques de deux liants hydrocarboné, l'un étant un bitume pur de classe 10/20 (liant de référence), l'autre étant un bitume pur de classe 10/20 comprenant 0,4% en poids de l'additif n°1 par rapport au poids total du liant bitumineux (liant n°1).

**Tableau I - Caractéristiques du liant**

| Essai | Liant de référence | Liant n°1 |
|---|---|---|
| Pénétrabilité à 25° NF N 1426 (1/10 mm) | 16 | 17 |
| TBA (en °C) EN 1427 | 65,4 | 65,6 |
| G* (15°C, 10Hz), liant frais (en MPa) EN 14770 | 63,1 | 58,1 |
| G* (15°C, 10Hz), liant vieilli au RTFOT (en MPa) | 74,5 | 73,3 |

Qu'il comprenne ou non le système d'additifs n°1, un liant bitumineux a quasiment les mêmes caractéristiques de pénétration, de température bille et anneau (TBA) et de module complexe G* à 15°C et 10Hz. Il est intéressant de noter que le bitume pur de classe 10/20, qu'il comprenne ou non le système d'additifs n°1, conserve un module élevé, ce qui autorise son utilisation dans un enrobé à module élevé.

### II.2. Liant hydrocarboné à base d'un bitume 35/50

Un liant hydrocarboné (L2) comprenant le système d'additifs n°1 a été préparé avec du bitume pur de classe 35/50. Les quantités des systèmes d'additifs ajoutées sont de 0,4% en poids par rapport au poids de bitume.

### III. Préparation d'enrobé

On réalise un enrobé de type béton bitumineux semi-grenu (BBSG) 0/10 par incorporation de granulats de type « la Noubleau » dans un liant bitumineux correspondant soit à un bitume pur de classe 35/50 (enrobé de référence) soit à un bitume pur de classe 35/50 comprenant 0,4% en poids en poids de système d'additifs n°1 par rapport au poids total du bitume (enrobé n°1).

La température de mélange pour l'enrobé de l'invention (enrobé n°1) comprenant le liant hydrocarboné et des granulats est de 120°C (température de fabrication). L'enrobé de référence ne comprenant pas de système d'additifs a été préparé à 160°C.

### Formulation de l'enrobé :

| | |
|---|---|
| - 6/10 Noubleau | 37,9% |
| - 2/6 Noubleau | 26,5% |
| - 0/2 Noubleau | 28,4% |
| - Filler calcaire | 1,9% |
| - Bitume 35/50 | 5,3% |

Le tableau II ci-dessous présente une comparaison entre les caractéristiques de l'enrobé n°1, fabriqué, mis en oeuvre et compacté à 120°C, et celles de l'enrobé de référence correspondant, fabriqué, mis en oeuvre et compacté à 160°C.

**Tableau II - Caractéristiques de l'enrobé**

| Essai | Enrobé référence (160°C) | Enrobé n°1 (120°C) | Spécifications NF P 98-130 (enrobé de classe 3) |
|---|---|---|---|
| Essai PCG : NF EN12697-31 | | | |
| - Pourcentage de vides à 60 girations | 6,8% | 7,1% | 5% < C60 < 10% |
| Essai Duriez : NF P 98-251-1 | | | |
| - Rapport r/R | 0,95 | 0,86 | ≥ 0,75 |
| Essai d'orniérage NF EN12697-22 | | | |
| - % de vides moyen des plaques | 3,0% | 6,0% | 5% < V < 8% |
| - Profondeur d'ornière en % à 30 000 cycles à 60°C | 3,1% | 2,8% | <5% |

Il est intéressant de noter que l'additif n°1 est directement actif au niveau de l'enrobé, puisque celui-ci peut être fabriqué à 120°C, au lieu des 165°C nécessaires pour l'enrobé de référence correspondant, soit une baisse de température de 45°C lors du procédé de fabrication.

L'efficacité de l'additif n°1 est clairement démontrée, puisque, contrairement à l'enrobé de référence, l'enrobé n°1 respecte les spécifications de la norme NF P 98-130 (enrobé de classe 3) pour une étude d'enrobé de classe 2. Les caractéristiques de l'enrobé n°1, qui comprend l'additif n°1, sont donc meilleures que celles de l'enrobé de référence.

## Revendications

1. Système d'additifs pour la préparation d'enrobé tiède à usage routier, à savoir mis en oeuvre à des températures inférieures de 30 à 50°C par rapport aux températures traditionnellement nécessaires pour la mise en oeuvre d'enrobés à chaud, comprenant :
- un ou plusieurs composants (A) choisis parmi les dopes d'adhésivité choisis parmi les alkylamidopolyamines, les alkylimidazolines et les alkylimidazopolyamines, qui sont des produits de réaction entre une polyamine (C) et un acide carboxylique gras ; les alkylpolyamines à chaîne grasse ; les produits de réaction entre une polyamine (C) et les produits de réaction d'un acide carboxylique gras ou d'une huile végétale avec la diéthanolamine ; ladite polyamine (C) est de préférence une polyalkylène-polyamines pouvant être, par exemple, la diméthylaminopropylamine, la N-aminoéthylpipérazine, la diéthylènetriamine, la triéthylènetétraamine ou la tétraéthylènepentaamine, et
- un ou plusieurs composants (B) choisis parmi les (poly)amines grasses éthoxylées et les amido(poly)amines grasses éthoxylées répondant à la formule 1 ou 2 suivante : 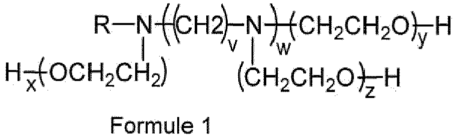 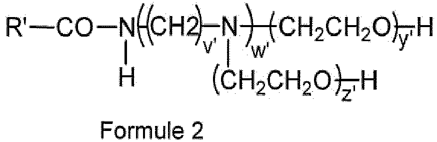 dans lesquelles :
- R et R' représentent un radical hydrocarboné en C8 à C24, de préférence un alkyle, un alcényle en C8 à C22 ou un mélange de ceux-ci ;
- v et v' sont des entiers supérieurs ou égaux à 1, de préférence compris de 1 à 6, et de manière encore plus préférée v et v' valent 3 ; et
- w est un entier supérieur ou égal à 0, de préférence compris entre 0 et 5, et mieux encore compris entre 0 et 3,
- w' est un entier supérieur ou égal à 1, de préférence compris entre 1 et 5, et mieux encore compris entre 1 et 3,
- x, y, z, sont des entiers choisis tels que la somme (x+y+z) soit supérieure à 3, de préférence comprise entre 3 et 20, et mieux encore de 15,
- y' et z' sont des entiers choisis tels que la somme (y'+z') soit comprise entre 1 et 1000, de préférence supérieure 3, de préférence comprise entre 3 et 20, et mieux encore de 15.

2. Système d'additifs selon la revendication 1, **caractérisé en ce que** lesdites (poly)amines grasses éthoxylées sont choisies parmi les monoamines, les diamines, les triamines ou les tétraamine grasses éthoxylées, de préférence parmi les diamines grasses éthoxylées répondant à la formule B1 suivante : 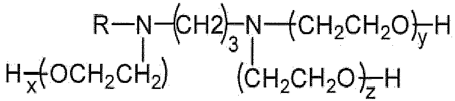 dans laquelle R représente une chaîne hydrocarbonée linéaire ou ramifiée, saturée ou insaturée, et x, y, z, sont des entiers choisis tels que la somme (x+y+z) soit supérieure à 3, de préférence comprise entre 3 et 20.

3. Système d'additifs selon la revendication 2, **caractérisé en ce que** dans la formule B1, la somme (x+y+z) soit de 15.

4. Système d'additifs selon la revendication 1, **caractérisé en ce que** lesdites amido(poly)amines grasses éthoxylées sont choisies parmi les amidomonoamines, les amidodiamines ou amidotriamines grasses éthoxylées, de préférence parmi les amidomonoamines grasses éthoxylées répondant à la formule B2 suivante : 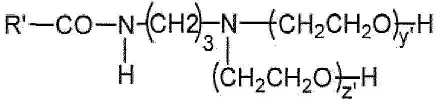 dans laquelle R' représente une chaîne hydrocarbonée linéaire ou ramifiée, saturée ou insaturée, et y' et z' sont des entiers choisis tels que la somme (y'+z') soit comprise entre 1 et 1000, de préférence supérieure 3, de préférence comprise entre 3 et 20.

5. Système d'additifs selon la revendication 4, **caractérisé en ce que** dans la formule B2, la somme (y'+z') soit de 15.

6. Système d'additifs selon l'une quelconque des revendications 1 à 5, **caractérisé en ce que** les groupements R ou R' dérive de graisses et d'huiles naturelles tels que le suif, l'huile de colza, de soja, le tallol, de préférence R ou R' représente un alkyle de suif.

7. Système d'additifs selon l'une quelconque des revendications précédentes, **caractérisé en ce qu'**il comprend, par rapport au poids total du système d'additif, de 10 à 70 %, de préférence de 10 et 50% en poids du ou des composants A et de 30 à 90%, de préférence de 50 à 90% en poids du ou des composants B.

8. Liant hydrocarboné comprenant un système d'additifs selon l'une quelconque des revendications 1 à 7, ledit liant hydrocarboné étant de préférence un bitume pur.

9. Liant hydrocarboné selon la revendication 8, **caractérisé en ce que** le système d'additifs représente entre 0,1 et 2% en poids, de préférence entre 0,3 et 0,6% en poids, par rapport au poids total du liant hydrocarboné.

10. Enrobé tiède à usage routier comprenant un liant hydrocarboné selon la revendication 8 ou 9 et un granulat.

## Patentansprüche

1. System an Additiven zur Herstellung einer warmen Mischung für den Straßenbau, die nämlich bei Temperaturen um 30 bis 50°C unter den traditionell im Verhältnis dazu notwendigen Temperaturen, die für die Anwendung von heiß verlegten Straßenbelägen nötig sind, angewendet wird, umfassend:
- einen oder mehrere Bestandteile (A), ausgewählt aus den Haftmitteln, die ausgewählt werden aus den Alkylamidpolyaminen, den Alkylimidazonlinen und den Alkylimidazopolyaminen, welche Reaktionsprodukte zwischen einem Polyamin (C) und einer carboxylhaltigen Fettsäure sind; den Alkylpolyaminen mit Fettkette; den Reaktionsprodukten zwischen einem Polyamin (C) und den Reaktionsprodukten einer carboxylhaltigen Fettsäure oder eines Pflanzenöls mit dem Diethanolamin; wobei das Polyamin (C) vorzugsweise ein Polyalkylen-Polyamin ist, das beispielsweise Dimethylaminpropylamin, N-Aminoethylpiperazin, Diethylentriamin, Triethylentetraamin oder Tetraethylenpentaamin sein kann, und
- einen oder mehrere Bestandteile (B), ausgewählt aus den ethoxylierten fetten (Poly)aminen und den ethoxylierten fetten Amid(poly)aminen entsprechend der folgenden Formel 1 oder 2: 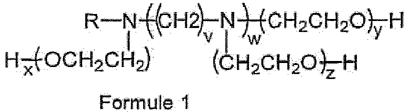 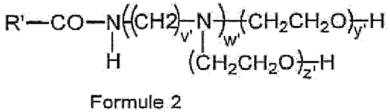 in denen:
- R und R' für einen Kohlenwasserstoffrest von C8 bis C24, vorzugsweise ein Alkyl, ein Alkenyl von C8 bis C22 oder eine Mischung derselben stehen;
- v und v' ganze Zahlen größer oder gleich 1, vorzugsweise zwischen 1 und 6, sind, und v und v' noch bevorzugter 3 wert sind; und
- w eine ganze Zahl größer oder gleich 0, vorzugsweise zwischen 0 und 5 und noch besser zwischen 0 und 3 ist,
- w' eine ganze Zahl größer oder gleich 1, vorzugsweise zwischen 1 und 5 und noch besser zwischen 1 und 3 ist,
- x, y, z ganze Zahlen sind, derart ausgewählt, dass die Summe (x+y+z) größer als 3, vorzugsweise zwischen 3 und 20, und noch besser 15 ist,
- y' und z' ganze Zahlen, derart ausgewählt, dass die Summe (y'+z') zwischen 1 und 1000, vorzugsweise größer als 3, vorzugsweise zwischen 3 und 20, und noch besser 15 sind.

2. System an Additiven nach Anspruch 1, **dadurch gekennzeichnet, dass** die ethoxylierten fetten (Poly)amine ausgewählt werden aus den Monoaminen, den Diaminen, den Triaminen oder den ethoxylierten fetten Tetraaminen, vorzugsweise aus den ethoxylierten fetten Tetraaminen entsprechend der folgenden Formel B1: 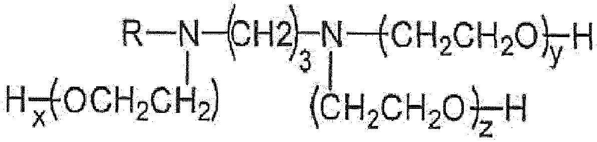 in der R für eine lineare oder verzweigte, gesättigte oder ungesättigte Kohlenwasserstoffkette steht, und x, y, z ganze Zahlen sind, derart ausgewählt, dass die Summe (x+y+z) größer als 3, vorzugsweise zwischen 3 und 20 ist.

3. System an Additiven nach Anspruch 2, **dadurch gekennzeichnet, dass** die Summe (x+y+z) in der Formel B1 15 ist.

4. System an Additiven nach Anspruch 1, **dadurch gekennzeichnet, dass** die ethoxylierten fetten Amid(poly)amide ausgewählt werden aus den ethoxylierten fetten Amidmonoaminen, Amiddiaminen oder Amidtriaminen, vorzugsweise aus den ethoxylierten fetten Amidmonoaminen entsprechend der folgenden Formel B2: 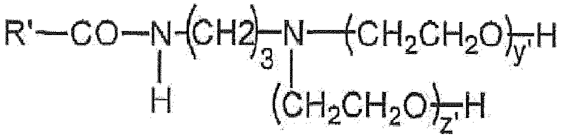 in der R' für eine lineare oder verzweigte, gesättigte oder ungesättigte Kohlenwasserstoffkette steht, und y' und z' ganze Zahlen sind, derart ausgewählt, dass die Summe (y'+z') zwischen 1 und 1000 enthalten, vorzugsweise größer als 3, vorzugsweise zwischen 3 und 20 enthalten ist.

5. System an Additiven nach Anspruch 4, **dadurch gekennzeichnet, dass** die Summe (y'+z') in der Formel B2 15 ist.

6. System an Additiven nach einem der Ansprüche 1 bis 5, **dadurch gekennzeichnet, dass** die Gruppierungen R oder R' aus natürlichen Fetten und Ölen wie Talg, Rapsöl, Sojaöl, Tallol abgeleitet werden, R oder R' vorzugsweise für ein Talgalkyl steht.

7. System an Additiven nach einem der vorstehenden Ansprüche, **dadurch gekennzeichnet, dass** es im Verhältnis zum Gesamtgewicht des Systems an Additiven 10 bis 70 Gew.-%, vorzugsweise 10 bis 50 Gew.-% von dem oder den Bestandteilen A und 30 bis 90 Gew.-%, vorzugsweise 50 bis 90 Gew.-% von dem oder den Bestandteilen B umfasst.

8. Kohlenwasserstoff-Bindemittel, umfassend ein System an Additiven nach einem der Ansprüche 1 bis 7, wobei das Kohlenwasserstoff-Bindemittel vorzugsweise reines Bitumen ist.

9. Kohlenwasserstoff-Bindemittel nach Anspruch 8, **dadurch gekennzeichnet, dass** das System an Additiven zwischen 0,1 und 2 Gew.-%, vorzugsweise zwischen 0,3 und 0,6 Gew.-% im Verhältnis zum Gesamtgewicht des Kohlenwasserstoff-Bindemittels darstellt.

10. Warme Mischung für den Straßenbau, umfassend ein Kohlenwasserstoff-Bindemittel nach Anspruch 8 oder 9 und ein Granulat.

## Claims

1. Additive system for preparing lukewarm mix asphalt for road use, that is implemented at temperatures that are 30°C to 50°C lower than the temperatures that are traditionally needed for implementing hot mix asphalt, comprising:
- one or more components (A) selected from the group of the group of adhesion dopes selected from the group of alkylamidopolyamines, alkylimidazolines, and alkylimidazopolyamines, which are the products of reaction between a polyamide (C) and a fatty carboxylic acid; fatty chain alkylpolyamines; the products of reaction between a polyamine (C) and the products of reaction of a fatty carboxylic acid or a vegetable oil with diethanolamine; said polyamine (C) is preferably a polyaklylene-polyamine, for examples, dimethylaminopropylamine, N-aminoethylpiperazine, diethylenetriamine, triethylenetetraamine, or tetraethylenepentaamine ; and
- one or more components (B) selected from the group of ethoxylated fatty (poly)amines and ethoxylated fatty amido(poly) amines satisfying the following formula 1 or 2: 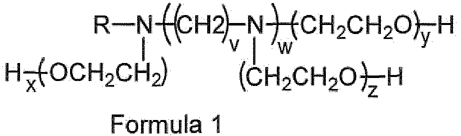 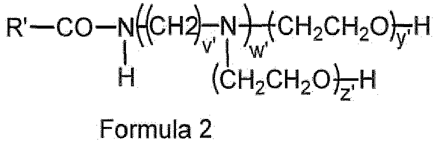 wherein:
- R and R' represent a C₈ to C₂₄ hydrocarbon radical, preferably an alkyl, a C₈ to C₂₂ alkenyl, or a mixture thereof;
- v and v' are integers greater than or equal to 1, preferably ranging from 1 to 6, and more preferably v and v' are equal to 3;
- w is an integer greater than or equal to 0, preferably ranging from 0 to 5, more preferably ranging from 0 to 3;
- w' is an integer greater than or equal to 1, preferably ranging from 1 to 5, better still ranging from 1 to 3;
- x, y, and z are integers selected so that the sum (x+y+z) is greater than 3, preferably ranges from 3 to 20, and better still is equal to 15,
- y' and z' are integers selected so that the sum (y'+z') is between 1 to 1000, preferably is greater than 3, preferably ranges from 3 to 20, and better still is equal to 15.

2. Additive system according to claim 1, **characterized in that** said ethoxylated fatty (poly)amines are selected from the group of ethoxylated fatty monoamines, diamines, triamines, and tetraamines, preferably from ethoxylated fatty diamines satisfying the following formula B1: 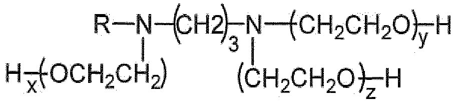 where R represents a linear or branched, saturated or unsaturated hydrocarbon chain and x, y, and z are integers selected such that the sum (x+y+z) is greater than 3, preferably ranging from 3 to 20.

3. Additive system according to claim 2, **characterized in that** in formula B1, the sum (x+y+z) is equal to 15.

4. Additive system according to claim 1, **characterized in that** said ethoxylated fatty amido(poly)amines are selected from the group of ethoxylated fatty amidomonoamines, amidodiamines, and amidotriamines, preferably from ethoxylated fatty amidomonoamines satisfying the following formula B2: 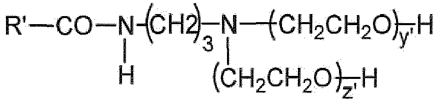 where R' represents a linear or branched, saturated or unsaturated hydrocarbon chain, and y' and z' are integers selected such that the sum (y'+z') ranges from 1 to 1000, is preferably greater than 3, preferably ranges from 3 to 20.

5. Additive system according to claim 4, **characterized in that** in formula B2, the sum (y'+z') is equal to 15.

6. Additive system according to any one of claims 1 to 5, **characterized in that** the R or R' groups are derived from natural fats and oils such as tallow, rapeseed oil, soya oil, tall oil, and preferably R or R' represents a tallow alkyl.

7. Additive system according to any one of the preceding claims, **characterized in that** it comprises, by weight, relative to the total weight of the additive system, 10% to 70%, preferably 10% to 50% by weight of the component(s) A and 30% to 90%, preferably 50% to 90% by weight of the component(s) B.

8. A hydrocarbon binder comprising an additive system according to any one of claims 1 to 7, said hydrocarbon binder preferably being pure bitumen.

9. A hydrocarbon binder according to claim 8, **characterized in that** the additive system represents 0.1% to 2% by weight, preferably 0.3% to 0.6% by weight, relative to the total weight of the hydrocarbon binder.

10. A lukewarm mix asphalt for road use comprising a hydrocarbon binder according to claim 8 or claim 9 and an aggregate.
